# EUROPEAN PATENT APPLICATION

(11) **EP 3 621 377 A1**
(43) Date of publication of application: **11.03.2020**
(21) Application number: 17908458.7
(22) Date of filing: 02.05.2017
(51) Int. Cl.: H04W 72/04, H04W 28/06

(54) **BASE STATION DEVICE, TERMINAL DEVICE, WIRELESS COMMUNICATION SYSTEM, AND WIRELESS COMMUNICATION METHOD**

(71) Applicant: Fujitsu Limited, Kawasaki-shi, Kanagawa 211-8588 (JP)
(72) Inventor: CHEN, Hongyang, Kawasaki-shi Kanagawa 211-8588 (JP); WU, Jianming, Kawasaki-shi Kanagawa 211-8588 (JP); SHIMOMURA, Tsuyoshi, Kawasaki-shi Kanagawa 211-8588 (JP)
(74) Representative: Haseltine Lake Kempner LLP
(86) International application number: PCT/JP2017/017261
(87) International publication number: WO 2018/203389

(57) **Abstract**

A base station device (100) includes a reception unit (100c) configured to receive an allocation request that requests allocation of a radio resource that is used to transmit first data; a scheduling unit (101) configured to allocate, to the first data when the allocation request is received by the reception unit (100c), a part of an uplink radio resource allocated to second data for which a larger delay than a delay allowed for the first data is allowed; and a transmission unit (104, 100c) configured to transmit an uplink indication signal indicating that the part of the uplink radio resource is allocated to the first data by the scheduling unit (101).

## Description

### Field

The embodiments discussed herein are related to a base station device, a terminal device, a radio communication system, and a radio communication method.

### Background Art

In the current networks, traffic of mobile terminals (smartphones or feature phones) occupy most of network resources. Furthermore, traffic used by mobile terminals tends to be continuously increased in the future.

In contrast, with the development of Internet of things (IoT) services (for example, transportation systems, smart meters, monitoring systems of devices or the like), there is a need to cope with services having various request conditions. Thus, in communication standards of the next generation (for example, fifth generation mobile communication (5G)), in addition to the standard technology of fourth generation mobile communication (4G) (for example, Non-Patent Documents 1 to 11), there is a demand for a technology that implements high-data-rate, high-capacity, and low-delay communication. Furthermore, regarding the next generation communication standards, technical studies are being conducted in 3GPP working groups (for example, TSG-RAN WG1, TSG-RAN WG2, etc.) (Non-Patent Documents 12 to 19).

As described above, in 5G, in order to respond various kinds of services, support of a lot of use cases classified into eMBB (enhanced mobile broadband), Massive MTC (machine type communications), and URLLC (ultra-reliable and low latency communication) is conceived.

From among the use cases described above, URLLC is the most difficult use case to be implemented. First, there are demands that the error rate in a radio section be of the order of 10⁻⁵, which is ultrahigh reliable communication. As a method of implementing ultrahigh reliability, there is a method for increasing an amount of resources to be used and providing redundancy to data. However, because an amount of radio resources is limited, it is not possible to increase the resources to be used without any limitation.

In addition, regarding a low delay, in URLLC, the aim of a delay in a radio section in a user plane in an uplink and a downlink is 0.5 milliseconds. This is a high request corresponding to less than 1/10 of 4G radio system Long Term Evolution (LTE). In URLLC, it is desired to simultaneously satisfy the above described two requests, i.e., ultrahigh reliability and low delay.

Furthermore, for a next generation radio communication system, in 3GPP meetings, there is a proposed method for simultaneously supporting ultrahigh reliable and low delay communication data (URLLC data) and another data (for example, eMBB data, etc.) by using the same carrier (Non-Patent Document 19).

Furthermore, there is a proposed technology for simultaneously supporting ultrahigh reliable and low delay communication data (URLLC data) and another data (for example, eMBB data, etc.) by using the same carrier in a downlink (Non-Patent Document 20).

### Citation List

### Non Patent Literature

Non-Patent Document 1: 3GPP TS 36.211 V14.2.0 (2017-03)
Non-Patent Document 2: 3GPP TS 36.212 V14.2.0 (2017-03)
Non-Patent Document 3: 3GPP TS 36.213 V14.2.0 (2017-03)
Non-Patent Document 4: 3GPP TS 36.300 V14.2.0 (2017-03)
Non-Patent Document 5: 3GPP TS 36.321 V14.2.0 (2017-03)
Non-Patent Document 6: 3GPP TS 36.322 V14.0.0 (2017-03)
Non-Patent Document 7: 3GPP TS 36.323 V14.2.0 (2017-03)
Non-Patent Document 8: 3GPP TS 36.331 V14.2.0 (2017-03)
Non-Patent Document 9: 3GPP TS 36.413 V14.2.0 (2017-03)
Non-Patent Document 10: 3GPP TS 36.423 V14.2.0 (2017-03)
Non-Patent Document 11: 3GPP TS 36.425 V14.0.0 (2017-03)
Non-Patent Document 12: 3GPP TS 38.801 V14.0.0 (2017-03)
Non-Patent Document 13: 3GPP TS 38.802 V14.0.0 (2017-03)
Non-Patent Document 14: 3GPP TS 38.803 V14.0.0 (2017-03)
Non-Patent Document 15: 3GPP TS 38.804 V14.0.0 (2017-03)
Non-Patent Document 16: 3GPP TS 38.900 V14.2.0 (2016-12)
Non-Patent Document 17: 3GPP TS 38.912 V14.0.0 (2017-03)
Non-Patent Document 18: 3GPP TS 38.913 V14.2.0 (2017-03)
Non-Patent Document 19: "New SID Proposal: Study on New Radio Access Technology", NTT docomo, RP-160671, 3GPP TSG RAN Meeting #71, Goteborg, Sweden, 7th -10th March, 2016
Non-Patent Document 20: "Discussion on Preemption Indicator for Multiplexing eMBB and URLLC in Downlink", Fujitsu, R1-1701920, 3GPP TSG-RAN WG1 Meeting #88, Athens, Greece, 13th - 17th February, 2017

### Summary

### Technical Problem

When a terminal device desires to transmit data, the terminal device transmits, to a base station device, information (for example, scheduling request) that requests allocation of a radio resource. In response to the scheduling request transmitted from the terminal device, the base station device allocates a radio resource and notifies the terminal device of the result. The terminal device transmits data in accordance the allocation information on the radio resource received from the base station device.

In contrast, for example, when the terminal device transmits URLLC data, there is a need for data communication that uses allocation of a radio resource capable of data communication under the condition (for example, ultrahigh reliable and low delay communication) requested by URLLC data and that uses allocation information on the radio resource. On this point, if the base station device simply allocates a radio resource in response to the scheduling request, for example, relatively large delay or the like is generated and thus there is a problem in that it is difficult to satisfy the condition requested by URLLC data.

The disclosed art has been conceived in light of the circumstances described above, and an object thereof is to provide a base station device, a terminal device, a radio communication system, and a radio communication method that can perform communication in accordance with allocation of radio resources considering conditions requested by data communication.

### Solution to Problem

According to an aspect of an embodiment, a base station disclosed in the present application includes: a reception unit configured to receive an allocation request that requests allocation of a radio resource that is used to transmit first data; a scheduling unit configured to allocate, to the first data when the allocation request is received by the reception unit, a part of an uplink radio resource allocated to second data for which a larger delay than a delay allowed for the first data is allowed; and a transmission unit configured to transmit an uplink indication signal indicating that the part of the uplink radio resource is allocated to the first data by the scheduling unit.

### Advantageous Effects of Invention

According to an aspect of an embodiment of the base station device, the terminal device, the radio communication system, and the radio communication method disclosed in the present invention, an advantage is provided in that it is possible to perform communication in accordance with allocation of radio resources considering conditions requested by data communication.

### Brief Description of Drawings

FIG. 1 is a diagram illustrating a configuration of a radio communication system according to a first embodiment.
FIG. 2 is a block diagram illustrating a configuration of a base station device according to the first embodiment.
FIG. 3 is a block diagram illustrating a configuration of a terminal device according to the first embodiment.
FIG. 4 is a block diagram illustrating a configuration of another terminal device according to the first embodiment.
FIG. 5 is a sequence diagram illustrating a radio communication method according to the first embodiment.
FIG. 6 is a diagram illustrating a specific example of a slot configuration according to the first embodiment.
FIG. 7 is a diagram illustrating another specific example of a slot configuration according to the first embodiment.
FIG. 8 is a block diagram illustrating a configuration of a base station device according to a second embodiment.
FIG. 9 is a block diagram illustrating a configuration of a terminal device according to the second embodiment.
FIG. 10 is a flowchart illustrating an operation of the terminal device according to the second embodiment.
FIG. 11 is a diagram illustrating a specific example of a slot configuration according to the second embodiment.
FIG. 12 is a diagram illustrating another specific example of a slot configuration according to the second embodiment.
FIG. 13 is a diagram illustrating a specific example of a slot configuration according to a third embodiment.
FIG. 14 is a diagram illustrating another specific example of a slot configuration according to the third embodiment.
FIG. 15 is a diagram illustrating still another specific example of a slot configuration according to the third embodiment.

### Description of Embodiments

Preferred embodiments of a base station device, a terminal device, a radio communication system, and a radio communication method disclosed in the present application will be explained with reference to accompanying drawings. Furthermore, the present invention is not limited to the embodiments.

### (First Embodiment)

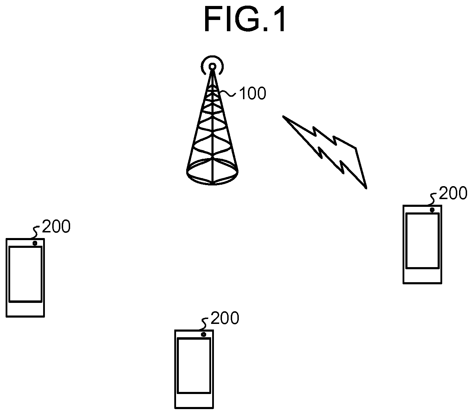

FIG. 1 is a diagram illustrating a configuration of a radio communication system according to a first embodiment. The radio communication system illustrated in FIG. 1 includes a base station device 100 and a plurality of terminal devices 200.

The base station device 100 transmits and receives, to and from the terminal devices 200, data, such as eMBB data and URLLC data. Furthermore, if the terminal device 200 desires to transmit URLLC data, the base station device 100 allocates, to the URLLC data, a part of a radio resource to be used by the other terminal device 200 to transmit eMBB data. Then, the base station device 100 transmits an indication signal indicating information on the radio resource that has been allocated for the transmission of the URLLC data and stops the transmission of the eMBB data that is to be performed by using the subject radio resource.

Each of the terminal devices 200 transmits and receives, to and from the base station device 100, data, such as eMBB data and URLLC data. If the terminal device 200 desires to transmit URLLC data, the terminal device 200 transmits, to the base station device 100, a scheduling request (hereinafter, referred to as an "SR") that is a request for allocation of the radio resource. Then, by using the radio resource that is allocated by the base station device 100 and that is supposed to be used by the other terminal device 200 to transmit eMBB data, the terminal device 200 transmits the URLLC data.

In a description below, the terminal devices 200 that transmit and receive eMBB data are sometimes referred to as eMBB terminal devices and the terminal devices 200 that transmit and receive URLLC data are sometimes referred to as URLLC terminal devices. However, the terminal devices 200 may also transmit and receive both eMBB data and URLLC data.

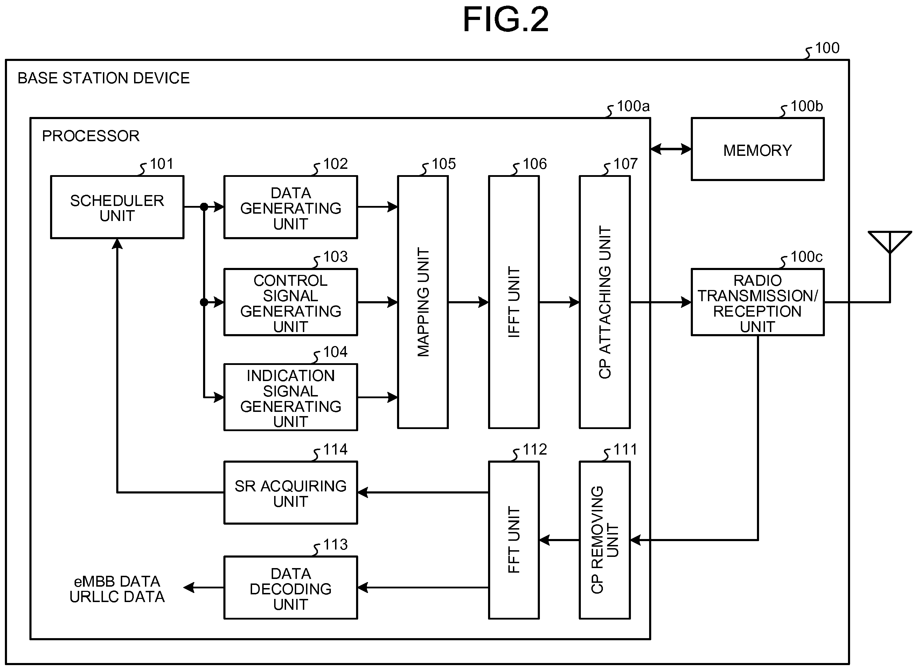

FIG. 2 is a block diagram illustrating a configuration of the base station device 100 according to the first embodiment. The base station device 100 illustrated in FIG. 2 includes a processor 100a, a memory 100b, and a radio transmission/reception unit 100c.

The processor 100a includes, for example, a central processing unit (CPU), a field programmable gate array (FPGA), or a digital signal processor (DSP), or the like and performs overall control of the base station device 100. Specifically, the processor 100a includes a scheduler unit 101, a data generating unit 102, a control signal generating unit 103, an indication signal generating unit 104, a mapping unit 105, an inverse Fast Fourier transform (IFFT) unit 106, a cyclic prefix (CP) attaching unit 107, a CP removing unit 111, a fast Fourier transformation (FFT) unit 112, a data decoding unit 113, and an SR acquiring unit 114.

The scheduler unit 101 performs scheduling that allocates the radio resources to eMBB data and URLLC data that are transmitted and received to and from the plurality of the terminal devices 200. Specifically, the scheduler unit 101 performs uplink scheduling that allocates the radio resources to the eMBB data and the URLLC data to be transmitted by the corresponding one of the terminal devices 200. In particular, if the scheduler unit 101 receives an SR from the URLLC terminal device 200 that desires to transmit URLLC data, the scheduler unit 101 allocates a closest radio resource to the URLLC data. At this time, even if the closest radio resource has already been allocated to transmission of eMBB data, the scheduler unit 101 allocates the subject radio resource to the transmission of the URLLC data and then allocates, for example, a radio resource of the subsequent slot for the transmission of the eMBB data.

Furthermore, the scheduler unit 101 also performs downlink scheduling that allocates the radio resources to the eMBB data and the URLLC data to be transmitted to the corresponding one of the terminal devices 200.

The data generating unit 102 generates, in accordance with the downlink scheduling allocated by the scheduler unit 101, eMBB data and URLLC data that are transmitted to the corresponding one of the terminal devices 200. Namely, the data generating unit 102 encodes and modulates the eMBB data and encodes and modulates the URLLC data that are addressed to the corresponding one of the terminal devices 200.

The control signal generating unit 103 generates, in accordance with the scheduling allocated by the scheduler unit 101, a control signal of each of eMBB and URLLC. Specifically, if a radio resource is allocated to uplink URLLC data, the control signal generating unit 103 generates an URLLC control signal that specifies the encoding rate of URLLC data, a modulation technique, transmission electrical power, and the like. The URLLC control signal is transmitted to the URLLC terminal device 200 that transmits URLLC data. Furthermore, the control signal generating unit 103 generates, for the eMBB terminal device 200 that transmits eMBB data, an eMBB control signal that specifies the encoding rate of the eMBB data, a modulation technique, transmission electrical power, and the like.

Furthermore, the control signal generating unit 103 also generates a downlink control signal that is to be sent to each of the terminal devices 200 and that indicates the encoding rate of eMBB data and URLLC data, a modulation technique, transmission electrical power, and the like.

The indication signal generating unit 104 generates, in accordance with the scheduling allocated by the scheduler unit 101, an indication signal indicating whether or not URLLC data is present in each of an uplink and a downlink. Specifically, if a radio resource has been allocated to uplink URLLC data, the indication signal generating unit 104 generates an uplink-purpose indication signal (hereinafter, referred to as an "UL indication signal") including information that identifies an uplink radio resource allocated to the URLLC data. The UL indication signal is transmitted to the eMBB terminal device 200 and stops transmission of eMBB data to be performed by using the radio resource that has been allocated to the URLLC data. Consequently, the indication signal generating unit 104 may also include, in the UL indication signal, information that specifies the radio resource that is reallocated to the eMBB data whose transmission has been stopped and that specifies, for example, a subsequent slot.

Furthermore, if URLLC data to be transmitted to each of the URLLC terminal devices 200 is generated, the indication signal generating unit 104 also generates a downlink-purpose indication signal (hereinafter, referred to as a "DL indication signal") including information that identifies a downlink radio resource allocated to downlink URLLC data. The indication signal generating unit 104 may also set the same radio parameter, such as a subcarrier interval, to an UL indication signal and a DL indication signal. Furthermore, the radio parameter of the UL indication signal and the DL indication signal may also be the same radio parameter as that used to be transmitted in downlink in the other control channels. Namely, the UL indication signal and the DL indication signal may also have the same Numerology or, alternatively, the indication signal and another control channel may also have the same Numerology. Furthermore, a reference signal (demodulation reference signal: DMRS) that is used to demodulate an indication signal may also be the same as a reference signal that is used to demodulate another control channel.

The mapping unit 105 maps eMBB data, URLLC data, the indication signal, and the control signal and generates transmission signals. Namely, the mapping unit 105 arranges eMBB data, URLLC data, an indication signal, and a control signal in the radio resource in accordance with the scheduling. At this time, the mapping unit 105 further divides each of the slots constituting a transmission signal into a plurality of mini slots and perform mapping in units of mini slots. Accordingly, if a radio resource is allocated to uplink URLLC data, the mapping unit 105 maps the UL indication signal onto a closest mini slot located at the time of reception of an SR and maps the URLLC control signal.

The IFFT unit 106 performs inverse Fast Fourier transformation on the transmission signal generated by the mapping unit 105 and generates a transmission signal in the time domain. Then, the IFFT unit 106 outputs the transmission signal to the CP attaching unit 107.

The CP attaching unit 107 attaches, in units of symbols, a CP to the transmission signal output from the IFFT unit 106. Then, the CP attaching unit 107 outputs, to the radio transmission/reception unit 100c, the transmission signal to which the CP has been attached.

The CP removing unit 111 removes the CP that has been attached to the reception signal in units of symbols. Then, the CP removing unit 111 outputs the reception signal from which the CP has been removed to the FFT unit 112.

The FFT unit 112 performs fast Fourier transformation on the reception signal output from the CP removing unit 111 and transforms the reception signal to a reception signal in frequency domain. In the reception signal, the eMBB data and the URLLC data transmitted from corresponding one of the terminal devices 200 are included. Furthermore, if the URLLC terminal device 200 that desires to transmit URLLC data is present, the SR transmitted from the subject URLLC terminal device 200 is included in the reception signal.

The data decoding unit 113 demodulates and decodes both the eMBB data and the URLLC data included in the reception signal. If the URLLC data is transmitted from the URLLC terminal device 200, a part of the radio resource allocated to the eMBB data to be transmitted by the other eMBB terminal device 200 is transferred to the URLLC data and then the eMBB data that has transferred its radio resource is transmitted by, for example, the subsequent slot. Consequently, if the URLLC data is included in the reception signal, the data decoding unit 113 decodes the entire eMBB data assuming that the eMBB data that is to be received by, for example, the subsequent slot is present at the position of this URLLC data.

The SR acquiring unit 114 acquires, from the reception signal, the SR transmitted from the URLLC terminal device 200 that desires to transmit the URLLC data. Namely, if uplink URLLC data is generated, because the SR is transmitted from the URLLC terminal device 200, the SR acquiring unit 114 monitors whether the SR is included in the reception signal and acquires, if the SR is included, the SR from the reception signal. Then, if the SR acquiring unit 114 acquires the SR, the SR acquiring unit 114 designates the scheduler unit 101 to allocate a radio resource to the uplink URLLC data.

The memory 100b includes, for example, a random access memory (RAM) or a read only memory (ROM), or the like and stores various kinds of information when a process is performed by the processor 100a.

The radio transmission/reception unit 100c performs, on the transmission signal output from the CP attaching unit 107, a radio transmission process, such as digital/analog (D/A) conversion and up-conversion. Then, the radio transmission/reception unit 100c transmits a transmission signal via an antenna. Furthermore, the radio transmission/reception unit 100c receives a signal via the antenna and performs, on the reception signal, a radio reception process, such as down-conversion and analog/digital (A/D) conversion. Then, the radio transmission/reception unit 100c outputs the reception signal to the CP removing unit 111.

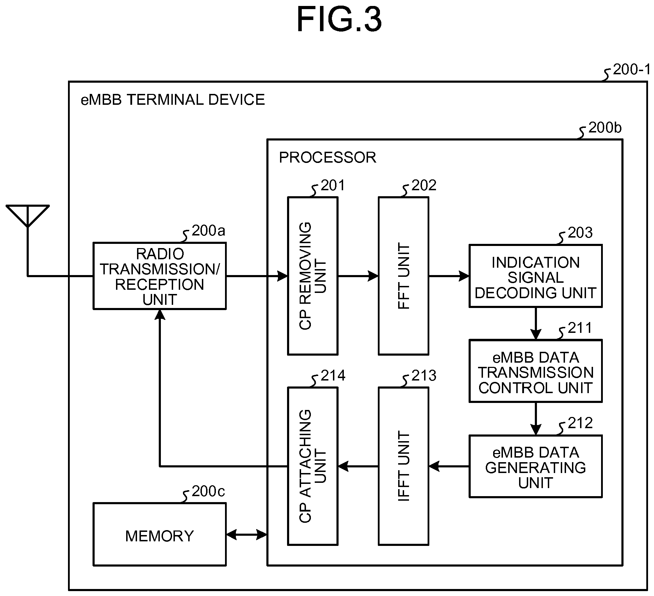

FIG. 3 is a block diagram illustrating a configuration of an eMBB terminal device 200-1 according to the first embodiment. The eMBB terminal device 200-1 illustrated in FIG. 3 includes a radio transmission/reception unit 200a, a processor 200b, and a memory 200c.

The radio transmission/reception unit 200a receives a signal via an antenna and performs, on the reception signal, a radio reception process, such as down-conversion and A/D conversion. Then, the radio transmission/reception unit 200a outputs the reception signal to the processor 200b. Furthermore, the radio transmission/reception unit 200a performs, on the transmission signal output from the processor 200b, a radio transmission process, such as D/A conversion and up-conversion. Then, the radio transmission/reception unit 200a transmits a transmission signal via the antenna.

The processor 200b includes, for example, a CPU, an FPGA, a DSP, or the like and performs overall control of the eMBB terminal device 200-1. Specifically, the processor 200b includes a CP removing unit 201, an FFT unit 202, an indication signal decoding unit 203, an eMBB data transmission control unit 211, an eMBB data generating unit 212, an IFFT unit 213, and a CP attaching unit 214.

The CP removing unit 201 removes the CP that has been attached to the reception signal in units of symbols. Then, the CP removing unit 201 outputs, to the FFT unit 202, the reception signal from which the CP has been removed.

The FFT unit 202 performs fast Fourier transformation on the reception signal output from the CP removing unit 201 and transforms the reception signal to a reception signal in frequency domain. In the reception signal, the eMBB data and the indication signal transmitted from the base station device 100 are included.

The indication signal decoding unit 203 demodulates and decodes the UL indication signal included in the reception signal. The UL indication signal is not always included in the reception signal because the UL indication signal is transmitted from the base station device 100 when a radio resource is allocated for the transmission of the URLLC data performed by the URLLC terminal device 200. Consequently, the indication signal decoding unit 203 performs blind decoding for each mini slot and monitors whether an UL indication signal to be addressed to the eMBB terminal device 200-1 is present.

Furthermore, the indication signal decoding unit 203 also demodulates and decodes the DL indication signal included in the reception signal and identifies the radio resource that has been allocated to the downlink URLLC data. Consequently, the eMBB terminal device 200-1 can demodulate and decode the eMBB data from the radio resource other than the radio resource that has been allocated to the URLLC data. As described above, because the indication signal decoding unit 203 performs blind decoding, it is preferable that the search spaces used for the UL indication signal and the DL indication signal be different. By separately setting the search spaces used for the UL indication signal and the DL indication signal, the indication signal decoding unit 203 can easily identify which one of the uplink and the downlink is used for transmission of the URLLC data, thereby reducing a processing load applied at the time of blind decoding.

If the UL indication signal has been detected by the indication signal decoding unit 203, the eMBB data transmission control unit 211 identifies, based on the UL indication signal, the radio resource allocated to the URLLC data and stops transmission of the eMBB data to be performed by using the subject radio resource. Namely, the eMBB data transmission control unit 211 stops, in the mini slot in which URLLC data is transmitted in an uplink, an output of the eMBB data from the eMBB data generating unit 212. Furthermore, if the radio resource that has been reallocated to the eMBB data whose transmission was stopped has been specified by the UL indication signal, the eMBB data transmission control unit 211 allows the subject eMBB data to be transmitted by using the specified radio resource.

The eMBB data generating unit 212 generates eMBB data to be transmitted to the base station device 100. Namely, the eMBB data generating unit 212 encodes and modulates the eMBB data. Then, the eMBB data generating unit 212 outputs the generated eMBB data to the IFFT unit 213. However, the eMBB data generating unit 212 stops an output of the eMBB data in a mini slot in which URLLC data is transmitted in accordance with control performed by the eMBB data transmission control unit 211.

The IFFT unit 213 performs inverse Fast Fourier transformation on the eMBB data output from the eMBB data generating unit 212 and then generates a transmission signal in time domain. Then, the IFFT unit 213 outputs the transmission signal to the CP attaching unit 214.

The CP attaching unit 214 attaches the CP to the transmission signal output from the IFFT unit 213 in units of symbols. Then, the CP attaching unit 214 outputs, to the radio transmission/reception unit 200a, the transmission signal to which the CP has been attached.

The memory 200c includes, for example, a RAM, a ROM, or the like and stores various kinds of information when a process is performed by the processor 200b.

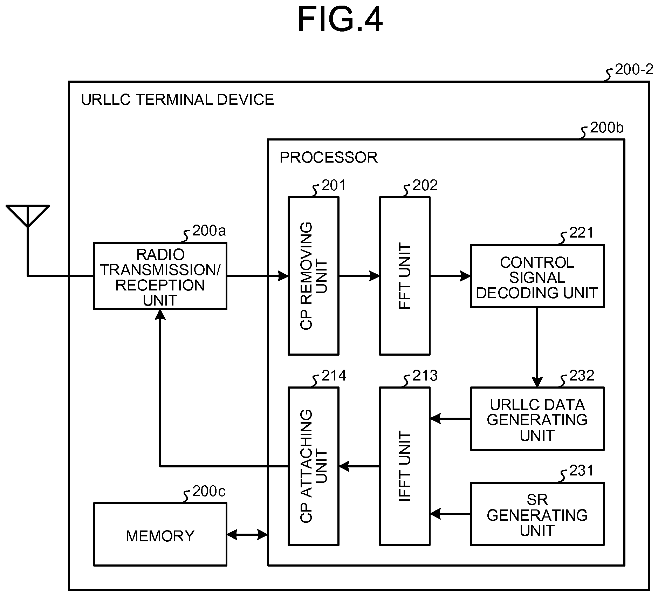

FIG. 4 is a block diagram illustrating a configuration of another terminal device 200-2 according to the first embodiment. In FIG. 4, components having the same configuration as those illustrated in FIG. 3 are assigned the same reference numerals and descriptions thereof in detail will be omitted. The URLLC terminal device 200-2 illustrated in FIG. 4 includes, similarly to the eMBB terminal device 200-1 illustrated in FIG. 3, the radio transmission/reception unit 200a, the processor 200b, and the memory 200c. However, the processor 200b included in the URLLC terminal device 200-2 illustrated in FIG. 4 is different from the eMBB terminal device 200-1 illustrated in FIG. 3 in that the processor 200b includes a control signal decoding unit 221, an SR generating unit 231, and an URLLC data generating unit 232.

The control signal decoding unit 221 demodulates and decodes an URLLC control signal included in a reception signal. The URLLC control signal is transmitted from the base station device 100 to the URLLC terminal device 200-2 when the URLLC terminal device 200-2 transmits a scheduling request (SR) that is a request for allocation of a radio resource to an uplink URLLC data. For example, the encoding rate, a modulation technique, or transmission electrical power of URLLC data is specified by the URLLC control signal.

If URLLC data that is to be transmitted from the URLLC terminal device 200-2 is generated, the SR generating unit 231 generates an SR that is a request for allocation of a radio resource to the URLLC data. The SR generated by the SR generating unit 231 is transmitted from the radio transmission/reception unit 200a to the base station device 100 via the IFFT unit 213 and the CP attaching unit 214.

The URLLC data generating unit 232 generates URLLC data in accordance with the URLLC control signal decoded by the control signal decoding unit 221. Namely, the URLLC data generating unit 232 generates the URLLC data by using the encoding rate and the modulation technique specified by the URLLC control signal. The URLLC data generated by the URLLC data generating unit 232 is transmitted from the radio transmission/reception unit 200a to the base station device 100 by using the radio resource that has been allocated by the base station device 100.

Furthermore, the information on the radio resource that has been allocated to the URLLC data may also be notified to the URLLC terminal device 200-2 by the UL indication signal that is transmitted to the eMBB terminal device 200-1. Furthermore, a radio resource that is to be allocated to URLLC data may also be determined in accordance with a predetermined rule in which, for example, an uplink mini slot that is closest to the mini slot in which the URLLC control signal has been received is allocated to the URLLC data.

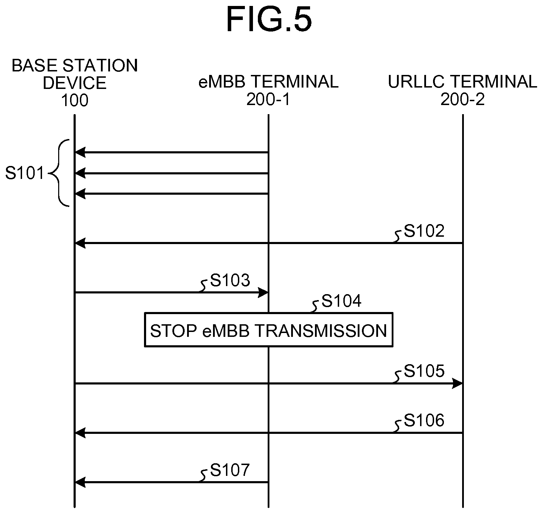

In the following, an uplink URLLC data transmission method used in a radio communication system having the configuration described above will be described with reference to a sequence diagram illustrated in FIG. 5.

In a period in which transmission of the URLLC data to be performed by the URLLC terminal device 200-2 is not generated, the eMBB terminal device 200-1 transmits eMBB data in accordance with scheduling performed by the base station device 100 (Step S101). Then, if URLLC data is generated in the URLLC terminal device 200-2, the URLLC terminal device 200-2 transmits, to the base station device 100, an SR that is a request for allocation of a radio resource (Step S102).

The SR is received by the base station device 100 and scheduling that allocates a radio resource to URLLC data is performed. At this time, in order for the URLLC data to be able to be immediately transmitted, even if a closest radio resource has already been allocated to eMBB data, a part of the subject radio resource is transferred to the URLLC data. Then, the UL indication signal that includes information for identifying the radio resource that has been allocated to the URLLC data is transmitted to the eMBB terminal device 200-1 (Step S103) and the eMBB terminal device 200-1 stops transmission of eMBB data to be performed by using the radio resource that is identified by the UL indication signal (Step S104).

Furthermore, if a radio resource is allocated to the URLLC data, the base station device 100 transmits an URLLC control signal to the URLLC terminal device 200-2 (Step S105). If the URLLC terminal device 200-2 receives the URLLC control signal, the URLLC terminal device 200-2 generates URLLC data by using the encoding rate and the modulation technique specified by the URLLC control signal and then transmits the URLLC data by using the radio resource that has been allocated by the base station device 100 (Step S106). At this time, because a part of the radio resource allocated to the eMBB data has been transferred to the URLLC data, the URLLC data is transmitted in low delay without waiting for the completion of transmission of the eMBB data. Thus, it is possible to satisfy the condition requested by the URLLC data.

Incidentally, in the UL indication signal received by the eMBB terminal device 200-1, information on the radio resource that has been reallocated to the eMBB data whose transmission was stopped is included.
Therefore, the eMBB terminal device 200-1 transmits the eMBB data that has transferred its radio resource to the URLLC data and whose transmission has been stopped by using a radio resource (for example, the radio resource in the subsequent slot) specified by the UL indication signal (Step S107) .

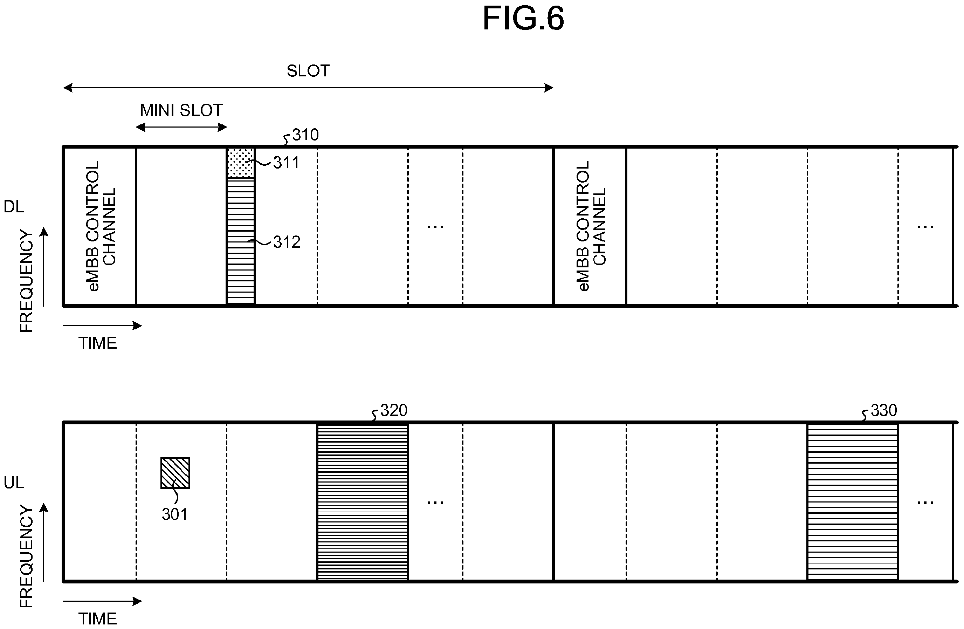

FIG. 6 is a diagram illustrating a specific example of a slot configuration according to the first embodiment. In FIG. 6, the upper part indicates a configuration of a downlink (DL) slot and a lower part indicates a configuration of an uplink (UL) slot.

As illustrated in FIG. 6, each of the downlink slot and the uplink slot has a plurality of mini slots. If URLLC data is generated in the URLLC terminal device 200-2, an SR 301 is transmitted to the base station device 100 in the uplink mini slot.

When the base station device 100 receives the SR 301, the base station device 100 allocates the uplink mini slots as much as possible to the URLLC data. In FIG. 6, a mini slot 320 is allocated to the URLLC data. At this time, even if the mini slot 320 has already been allocated to the eMBB data, priority is given to the transmission of the URLLC data and the mini slot 320 that can transmits the URLLC data fastest is transferred to the URLLC data.

If the mini slot 320 is allocated to the URLLC data, the base station device 100 transmits, in a mini slot 310 immediately after the reception of the SR 301, an UL indication signal 311 that indicates the radio resource allocated to the URLLC data. The UL indication signal 311 also includes information that specifies a mini slot 330 that is to be used to transmit the eMBB data whose transmission has been stopped due to allocating the mini slot 320 to URLLC data. The mini slot 330 is located at the same position as that of the mini slot 320 in, for example, a slot.

In the mini slot 310 in a downlink, in addition to the UL indication signal 311, an URLLC control signal 312 is transmitted. Then, the UL indication signal 311 is received by the eMBB terminal device 200-1 and then the eMBB terminal device 200-1 stops transmission of the eMBB data in the mini slot 320. In contrast, the URLLC control signal 312 is received by the URLLC terminal device 200-2 and then the URLLC terminal device 200-2 transmits the URLLC data using the mini slot 320. Consequently, it is possible to satisfy the condition of a low delay requested by the URLLC data.

Furthermore, the eMBB terminal device 200-1 transmits the eMBB data, whose transmission to be performed in the mini slot 320 has been stopped, in the mini slot 330 that is the subsequent slot. The base station device 100 treats the eMBB data transmitted in the mini slot 330 as the eMBB data transmitted in the mini slot 320 and decodes the eMBB data together with the pieces of eMBB data that are transmitted in the mini slots located before and after the mini slot 320.

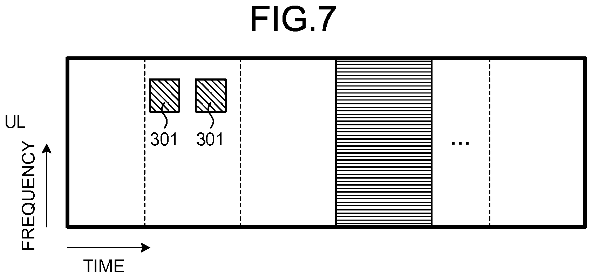

Furthermore, as illustrated in FIG. 7, the SR 301 used in a case where the URLLC data has been generated may also be repeatedly transmitted multiple times.
Furthermore, if the SR 301 is repeatedly transmitted multiple times, each of the SRs 301 may also be transmitted at a different frequency. By doing so, it is possible to obtain diversity effect of time and frequency and thus the SR 301 is reliably received by the base station device 100. Consequently, if URLLC data to be transmitted by an uplink is generated, it is possible to reliably allocate a radio resource to the URLLC data.

As described above, according to the embodiment, if uplink URLLC data is generated, an URLLC terminal device transmits an SR and a base station device allocates, to the URLLC data, a radio resource that has already been allocated to transmission of eMBB data to be transmitted by the eMBB terminal device. Then, the base station device transmits an UL indication signal that identifies the radio resource allocated to the URLLC data and allows transmission of the eMBB data performed by the eMBB terminal device to be stopped. Consequently, the URLLC terminal device can immediately transmit the URLLC data without waiting for the completion of transmission of the eMBB data and can satisfy the condition of a low delay requested by the URLLC data.

### (Second Embodiment)

The characteristic of a second embodiment is that a processing load applied to blind decoding of an indication signal of the terminal device is reduced by arranging, in each mini slot, a monitoring signal indicating whether monitoring of an UL indication signal and a DL indication signal is need by a terminal device.

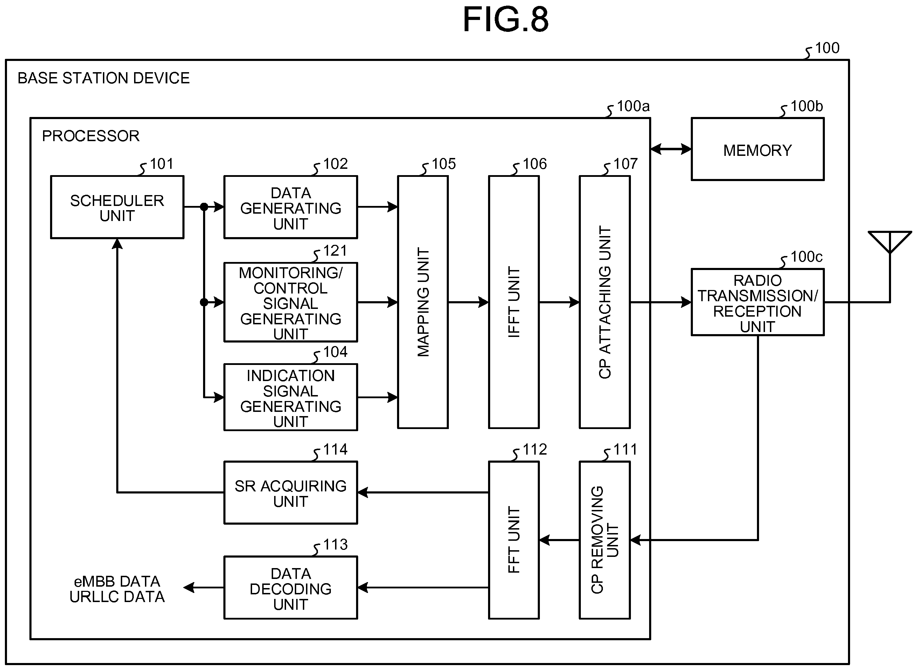

A radio communication system according to the second embodiment is the same as the radio communication system (FIG. 1) according to the first embodiment; therefore, a description thereof will be omitted. FIG. 8 is a block diagram illustrating a configuration of the base station device 100 according to a second embodiment. In FIG. 8, components having the same configuration as those illustrated in FIG. 2 are assigned the same reference numerals and descriptions thereof will be omitted. The base station device 100 illustrated in FIG. 8 includes, instead of the control signal generating unit 103 illustrated in FIG. 2, a monitoring/control signal generating unit 121.

The monitoring/control signal generating unit 121 generates control signals of eMBB and URLLC in accordance with scheduling performed by the scheduler unit 101. Specifically, if a radio resource is allocated to uplink URLLC data, the monitoring/control signal generating unit 121 generates an URLLC control signal, whereas, if a radio resource is allocated to a downlink URLLC data, the monitoring/control signal generating unit 121 generates a control signal related to the downlink URLLC data. Furthermore, the monitoring/control signal generating unit 121 generates a control signal related to uplink and downlink eMBB data with respect to the eMBB terminal device 200.

Furthermore, the monitoring/control signal generating unit 121 generates a monitoring signal indicating whether an UL indication signal and a DL indication signal are included in each of the mini slots. Specifically, the monitoring/control signal generating unit 121 generates a 2-bit monitoring signal that includes therein 1 bit indicating presence or absence of an UL indication signal and 1 bit indicating presence or absence of a DL indication signal.

For example, no radio resource is allocated to uplink and downlink URLLC data, the monitoring/control signal generating unit 121 generates a monitoring signal "00" indicating that monitoring of the UL indication signal and the DL indication signal are not needed. Furthermore, if a radio resource is allocated to only uplink URLLC data, the monitoring/control signal generating unit 121 generates a monitoring signal "10" indicating that monitoring of the UL indication signal is needed and monitoring of the DL indication signal is not needed. Furthermore, if a radio resource is allocated to URLLC data in only a downlink, the monitoring/control signal generating unit 121 generates a monitoring signal "01" indicating that monitoring of the UL indication signal is not needed and monitoring of the DL indication signal is needed. Then, if the radio resources are allocated to URLLC data in both of an uplink and a downlink, the monitoring/control signal generating unit 121 generates a monitoring signal "11" indicating that monitoring of the UL indication signal and the DL indication signal are needed.

By arranging such monitoring signals to predetermined positions in each of the mini slots, when decoding a monitoring signal, the eMBB terminal device 200-1 can determine whether blind decoding of the UL indication signal and the DL indication signal are needed. Then, blind decoding of the UL indication signal or the DL indication signal is not needed, the eMBB terminal device 200-1 can reduce the processing load by omitting the blind decoding.

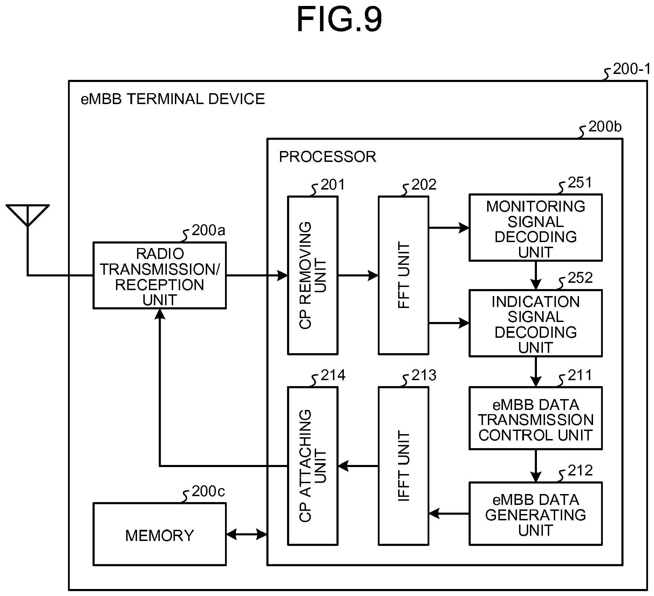

FIG. 9 is a block diagram illustrating a configuration of the eMBB terminal device 200-1 according to the second embodiment. In FIG. 9, components having the same configuration as those illustrated in FIG. 3 are assigned the same reference numerals and descriptions thereof will be omitted. The eMBB terminal device 200-1 illustrated in FIG. 9 includes, instead of the indication signal decoding unit 203 illustrated in FIG. 3, a monitoring signal decoding unit 251 and an indication signal decoding unit 252.

The monitoring signal decoding unit 251 demodulates and decodes the monitoring signals that are arranged at predetermined positions in each of the mini slots in a reception signal. Then, the monitoring signal decoding unit 251 specifies, in accordance with the content of the monitoring signal, the target for the blind decoding to be performed by the indication signal decoding unit 252. Namely, if a monitoring signal indicating that monitoring of the UL indication signal and DL indication signal are not needed is received, the monitoring signal decoding unit 251 notifies the indication signal decoding unit 252 that blind decoding of the indication signal is not needed. Furthermore, if a monitoring signal indicating that monitoring of only the UL indication signal or the DL indication signal is needed is received, the monitoring signal decoding unit 251 designates the indication signal decoding unit 252 to perform blind decoding on only the specified indication signal. Furthermore, if a monitoring signal indicating that monitoring of both of the UL indication signal and the DL indication signal are needed is received, the monitoring signal decoding unit 251 designates the indication signal decoding unit 252 to perform blind decoding on both the UL indication signal and the DL indication signal. The monitoring signal decoding unit 251 decodes a monitoring signal for each mini slot; however, because the monitoring signal is a signal with a small size of, for example, 2 bits, an increase in processing load due to decoding of the monitoring signal is small.

The indication signal decoding unit 252 demodulates and decodes, in accordance with designation received from the monitoring signal decoding unit 251, the UL indication signal and the DL indication signal targeted for blind decoding. The indication signal decoding unit 252 performs, instead of performing blind decoding on the UL indication signal and the DL indication signal in each of the mini slots, blind decoding on only the needed indication signal in accordance with the content of the monitoring signal, thereby it is possible to reduce the processing load generated due to the blind decoding to be performed on the indication signal.

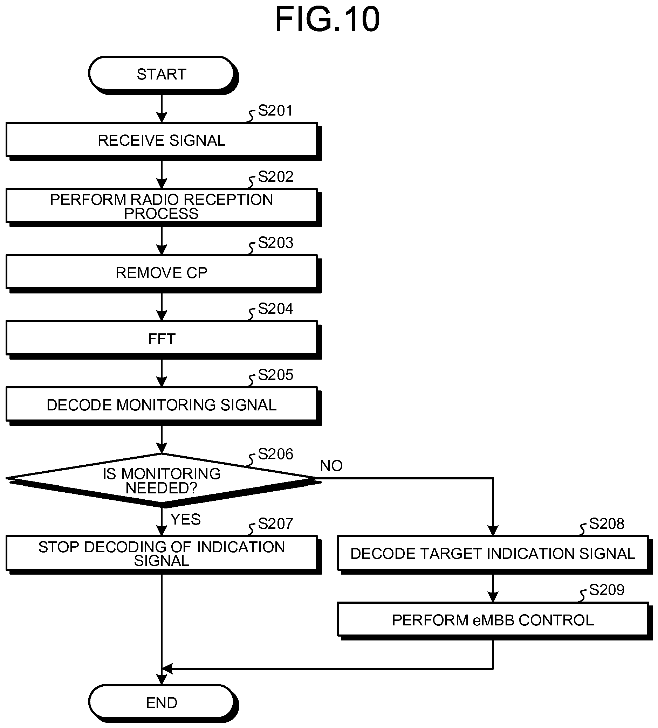

In the following, an operation of the eMBB terminal device 200-1 having the configuration described above will be described with reference to the flowchart illustrated in FIG. 10.

The signal transmitted from the base station device 100 is received by the radio transmission/reception unit 200a via the antenna (Step S201). The reception signal is subjected to a radio reception process by the radio transmission/reception unit 200a (Step S202) and is output to the CP removing unit 201 in the processor 200b. Then, a CP attached to each of the symbols in the reception signal is removed by the CP removing unit 201 (Step S203) and the reception signal is subjected to fast Fourier transformation by the FFT unit 202 (Step S204), thereby a reception signal in frequency domain is obtained.

Because a monitoring signal has been arranged at a predetermined position of each of the mini slots in the reception signal, the monitoring signal is demodulated and decoded by the monitoring signal decoding unit 251 for each mini slot (Step S205). Then, based on the result of decoding the monitoring signal, it is determined whether the indication signal needs to be monitored (Step S206). Specifically, if the monitoring signal indicates that monitoring of the UL indication signal and the DL indication signal are not need (Yes at Step S206), the obtained result is notified to the indication signal decoding unit 252 and then the blind decoding to be performed on the indication signal by the indication signal decoding unit 252 is stopped (Step S207).

Furthermore, if the monitoring signal indicates that monitoring of one of or both of the UL indication signal and the DL indication signal are needed (No at Step S206), the indication signal that is targeted for monitoring is designated to the indication signal decoding unit 252 and then the indication signal corresponding to the monitoring target is subjected to blind decoding by the indication signal decoding unit 252 (Step S208). Namely, in the case where only the UL indication signal is the monitoring target, only the UL indication signal is subjected to blind decoding; in the case where only the DL indication signal is the monitoring target, only the DL indication signal is subjected to blind decoding; in the case where the UL indication signal and the DL indication signal are the monitoring target, both of the UL indication signal and the DL indication signal are subjected to blind decoding.

Then, based on the result of decoding the indication signal, transmission or reception of the eMBB data is controlled (Step S209). Specifically, if the UL indication signal has been decoded, transmission of the eMBB data to be performed by using the radio resource that has been allocated to the URLLC data is stopped by the eMBB data transmission control unit 211. Furthermore, if the DL indication signal has been decoded, the eMBB data is demodulated and decoded from the radio resource other than the radio resource that has been allocated to the URLLC data.

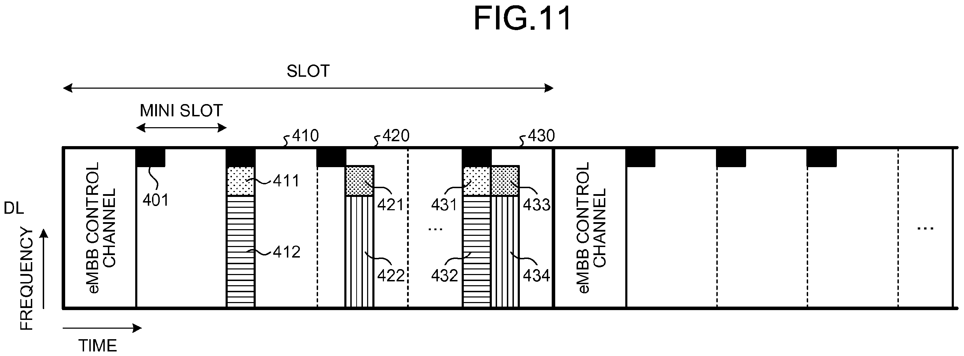

FIG. 11 is a diagram illustrating a specific example of a slot configuration according to the second embodiment. As illustrated in FIG. 11, a downlink slot has a plurality of mini slots. In each of the mini slots, for example, at the top position, a monitoring signal 401 is arranged. The monitoring signal 401 in each of the mini slots indicates whether the UL indication signal and the DL indication signal are included in the corresponding one of the mini slots.

Specifically, for example, because an UL indication signal 411 is included in a mini slot 410, the monitoring signal 401 in the mini slot 410 indicates that only the UL indication signal needs to be monitored. Furthermore, in the mini slot 410 in which the UL indication signal 411 is included, an URLLC control signal 412 that is a control signal related to the uplink URLLC data is also included.

Furthermore, for example, because a DL indication signal 421 is included in a mini slot 420, the monitoring signal 401 in the mini slot 420 indicates that only the DL indication signal needs to be monitored. Furthermore, in the mini slot 420 in which the DL indication signal 421 is included, a control signal 422 related to the downlink URLLC data is also included.

Furthermore, for example, because an UL indication signal 431 and a DL indication signal 433 are included in a mini slot 430, the monitoring signal 401 in the mini slot 430 indicates that both of the UL indication signal and the DL indication signal need to be monitored. Furthermore, in also the mini slot 430, both of an URLLC control signal 432 associated with the UL indication signal 431 and a control signal 434 associated with the DL indication signal 433 are included.

In each of the mini slots, the monitoring signal 401 is a 2-bit signal, at most, including 1 bit indicating presence or absence of the UL indication signal and 1 bit indicating presence or absence of the DL indication signal. Thus, by decoding the 2-bit monitoring signal for each mini slot, the eMBB terminal device 200-1 can determine whether blind decoding is needed to be performed on the UL indication signal and the DL indication signal. As the result, it is possible to omit unneeded blind decoding and accordingly reduce the processing load applied to the blind decoding. Furthermore, because it is possible to determine whether or not indication signal is present based on the monitoring signal, if the indication signal is not present, it is possible to allocate a radio resource for the indication signal to, for example, the eMBB data, and transmit the signal to the eMBB terminal device 200-1, thereby efficiently using the radio resources.

As described above, according to the embodiment, the base station device arranges, for each mini slot, a monitoring signal indicating whether blind decoding needs to be performed on an indication signal, and the eMBB terminal device decodes the monitoring signal and performs blind decoding on the indication signal as needed. Consequently, if the indication signal is not included in a mini slot, the eMBB terminal device does not need to unneeded blind decoding, thereby it is possible to reduce the processing load caused by the blind decoding.

Furthermore, in the second embodiment, a description has been given with the assumption that a monitoring signal is arranged in each of the mini slots; however, the monitoring signal may also be transmitted by quasi-static signaling, such as radio resource control (RRC) signaling. Furthermore, monitoring signal may also be transmitted to a plurality of terminal devices including the eMBB terminal devices by broadcast or multicast or, alternatively, transmitted to a specific eMBB terminal device by unicast by using, for example, a physical downlink control channel (PDCCH) or higher-layer signaling (for example, RRC signaling).

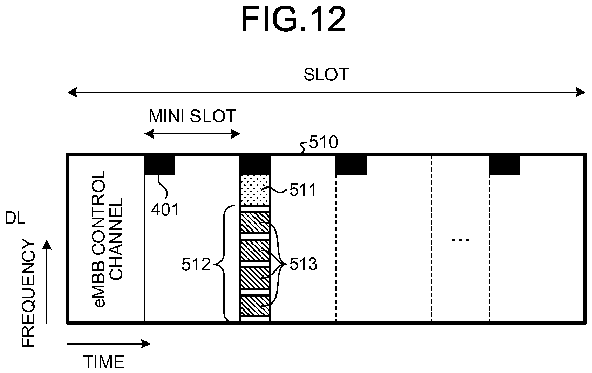

Furthermore, in the second embodiment described above, the monitoring signal may also indicate whether or not the control signal related to the URLLC data is present. Namely, for example, as illustrated in FIG. 12, a case in which an indication signal 511 and a control signal 512 are arranged in a mini slot 510 will be considered. Here, the indication signal 511 may also be an UL indication signal or may also be a DL indication signal. It is assumed that, the control signal 512 includes, for example, four control information storage areas 513 each of which can store control information related to uplink or downlink URLLC data.

In this case, the monitoring signal 401 arranged at the top position in the mini slot 510 identifies, from among the four control information storage areas 513, the control information storage area 513 that stores therein the control information related to the URLLC data that is associated with the indication signal 511. Thus, by decoding the monitoring signal, the URLLC terminal device can easily identify the control information that is needed to decode the URLLC data or identify the control information storage area that stores therein the control information that is needed to transmit the URLLC data.

### (Third Embodiment)

In the first and the second embodiments described above, an example in which URLLC data and eMBB data are allocated in units of mini slots has been described. In a third embodiment, an example in which data is allocated based on a code block (CB) or a code block group (CBG) will be described. Furthermore, the CBG mentioned here is a group of one or more CBs. The number of CBs included in a single CBG is equal to or less than the number of CBs included in a single transport block (TB). In short, a TB is represented by one or more CBGs. Furthermore, in the third embodiment, the components having the same configuration as those described in the first and the second embodiments are assigned the same reference numerals and descriptions thereof will be omitted. Furthermore, in the third embodiment, a description will be given with the assumption that a single CBG includes two CBs.
Furthermore, it is assumed that four CBGs are included in a single slot and assumed that data is allocated in units of CBs.

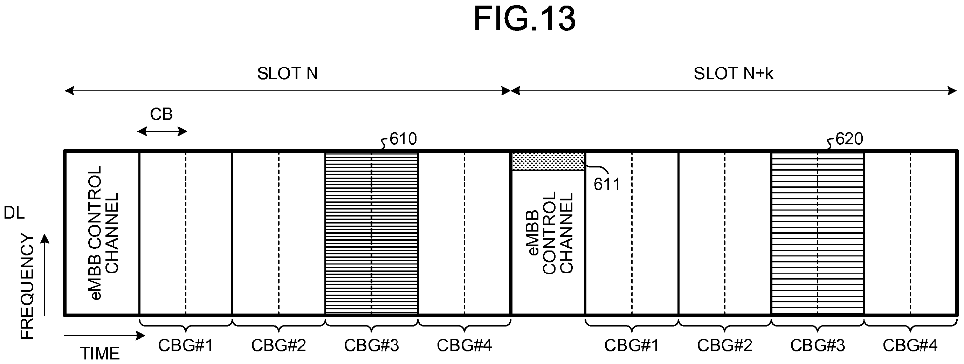

FIG. 13 is a diagram illustrating a specific example of a slot configuration in the case where data is allocated in units of CBs. Furthermore, the TB described above may also correspond to a slot. Furthermore, a CBG may also be independently set for, for example, each slot (or TB) and, furthermore, setting of or identification information on the CBG in each of the slots (or TBs) may also be notified by using a control channel.

As illustrated in FIG. 13, even when scheduling has been set such that the eMMB data is to be transmitted in CBGs #1 to #4 in a slot N, if URLLC data is generated, URLLC data 610 is mapped onto, for example, the CBG #3 in the slot N. Then, eMBB data 620 that was scheduled to be transmitted by the CBG #3 in the slot N is transmitted by the CBG #3 in a slot N+k (k is an integer equal to or greater than 1).

In this way, information indicating that the URLLC data 610 is mapped onto the CBG #3 in the slot N and the eMBB data 620 is mapped onto the CBG #3 in the slot N+k is notified to the eMBB terminal device by an indication signal 611 arranged in the eMBB control channel in, for example, the slot N+k. Namely, the indication signal 611 is included in the control channel addressed to the eMBB terminal device that is affected by transmission of the URLLC data 610. This control channel may also be a control channel common to a group of a plurality of terminal devices. The eMBB terminal device refers to the indication signal 611 and performs a process, such as decoding, by excluding the URLLC data 610 that has been mapped onto the CBG #3 in the slot N.

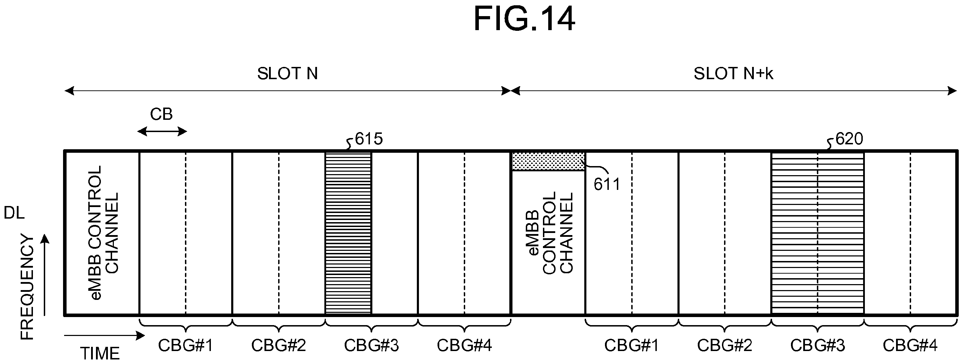

FIG. 14 is a diagram illustrating another specific example of a slot configuration in the case where data is allocated in units of CBs. In FIG. 14, the components having the same configuration as those illustrated in FIG. 13 are assigned the same reference numerals.

As illustrated in FIG. 14, even when scheduling has been set such that the eMMB data is to be transmitted in the CBGs #1 to #4 in the slot N, if URLLC data is generated, URLLC data 615 is mapped onto one of the CBs in, for example, the CBG #3 included in the slot N. Then, eMBB data 620 that was scheduled to be transmitted by the CBG #3 in the slot N is transmitted by the CBG #3 in the slot N+k (k is an integer equal to or greater than 1).

In this way, information indicating that the URLLC data 615 is mapped onto one of the CBs in the CBG #3 included in the slot N and indicating that the eMBB data 620 is mapped onto the CBG #3 included in the slot N+k is notified to the eMBB terminal device by the indication signal 611 that is arranged in the eMBB control channel in, for example, the slot N+k.

In the example illustrated in FIG. 14, the URLLC data 615 is mapped onto one of the CBs included in the CBG #3 in the slot N and, furthermore, the eMBB data is mapped onto the rest of the CBs. However, as a whole, the data in the CBG #3 in the slot N is fragmentary and unneeded data for the eMBB terminal device; therefore, the eMBB terminal device refers to the indication signal 611 and performs a process of decoding by excluding all of the data included in the CBG #3 in the slot N.

Furthermore, as illustrated in FIGS. 13 and 14, if the URLLC data 610 and 615 is transmitted by using the CBG #3 in the slot N, the eMBB terminal device that was scheduled to receive the eMBB data by using the subject CBG #3 may also reply a NACK indicating that reception has been failed. In this case, after having received the NACK from the eMBB terminal device, the base station device may also allocate the CBG #3 included in the slot N+k to the eMMB data 620 that was scheduled to be transmitted by using the CBG #3 included in the slot N and may also transmit the indication signal 611 that indicates this state.

Furthermore, if the indication signal 611 is transmitted in the slot N, the eMBB terminal device do not need to feed back an ACK or a NACK related to the CBG #3 included in the slot N. Namely, because it is indicated, by the indication signal 611, that the eMBB data 620 is to be mapped onto the CBG #3 included in the slot N+k, the eMBB terminal device can omit a reply of NACK even if reception of the eMBB data is failed in the CBG #3 included in the slot N. In other words, it is possible to simplify a retransmission request process, such as a hybrid automatic repeat request (HARQ), and reduce the load applied to the eMBB terminal device.

Furthermore, in the third embodiment described above, if a CBG (for example, the CBG #3) included in the slot N is used to transmit the URLLC data, the eMBB data that was scheduled to be transmitted is transmitted by using the same CBG (for example, the CBG #3) included in the other slot N+k; however, the embodiment is not limited to this. For example, the eMBB data that was scheduled to be transmitted may also be transmitted by using another CBG (for example, the CBG #1) included in the slot N+k.

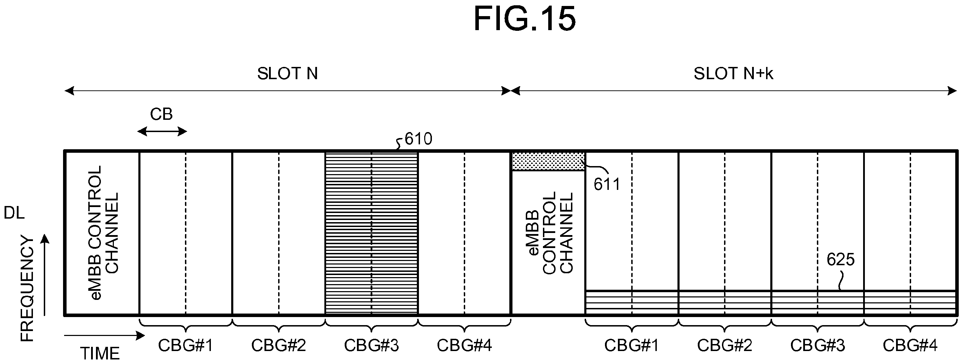

Furthermore, in accordance with an allocation state of data addressed to the other terminal devices or in accordance with the radio resources or the like, the eMBB data that was scheduled to be transmitted by using the slot N may also be transmitted by using a plurality of CBGs in, for example, the slot N+k or may also be transmitted by using a plurality of slots. Furthermore, when a plurality of CBGs or a plurality of slots is used, for example, as illustrated in FIG. 15, eMBB data 625 may also be mapped across the plurality of CBGs or the plurality of slots.

FIG. 15 illustrates an example in which the eMBB data 625 that was not transmitted because the URLLC data 610 was transmitted by using the slot N is mapped onto the frequency band across the CBGs #1 to #4 included in the slot N+k. In the slot N+k, because the eMBB data 625 that was scheduled to be transmitted by using the slot N is transmitted, new eMBB data addressed to the eMBB terminal device that receives the subject eMBB data 625 is not transmitted by using the slot N+k. Thus, in the slot N+k, it is possible to ensure a radio resource, such as a predetermined number of subcarriers, to be allocated to the eMBB data 625.

By doing so, even when data is allocated based on the CBGs, it is possible to transmit URLLC data. Furthermore, in the third embodiment described above, similarly to the other embodiments, if uplink URLLC data is generated, the URLLC terminal device transmits an SR and the base station device allocates, to the URLLC data, the radio resource that has been allocated to transmission of the eMBB data to be performed by the eMBB terminal device. Then, the base station device transmits the UL indication signal that identifies the radio resource allocated to the URLLC data and stops transmission of the eMBB data to be performed by the eMBB terminal device. Consequently, the URLLC terminal device can immediately transmit the URLLC data without waiting for the completion of transmission of the eMBB data and satisfy a low delay condition requested by the URLLC data.

In each of the embodiments described above, in the radio resource allocated to the URLLC data, transmission of the eMBB data performed by the eMBB terminal device is stopped; however, transmission of the eMBB data does not need to be completely stopped. Namely, the eMBB terminal device may also transmit the eMBB data by reducing transmission electrical power in the time and the frequency allocated to the URLLC data. Namely, if the eMBB terminal device receives an UL indication signal, the eMBB terminal device suppresses transmission of the eMBB data by stopping the use in the radio resource allocated to the URLLC data or by reducing the transmission electrical power.

In contrast, the URLLC terminal device increases the transmission electrical power in the time and the frequency allocated to the URLLC data and transmits the URLLC data, thereby improving the reliability of the URLLC data. At this time, information that designates transmission electrical power in each of the terminal devices may also be included in an UL indication signal or may also be included in a control signal common to each of the terminal devices. The base station device uses, for example, successive interference cancellation (SIC) and cancels one of the eMBB data and the URLLC data as an interference signals, thereby acquiring the other data.

In each of the embodiments described above, downlink control information (DCI) related to the indication signal may also have the same size as that of the other DCI used for, for example, scheduling, downlink resource allocation information, or the like. For example, the DCI related to the indication signal may also be generated by attaching cyclic redundancy check (CRC) to the control information and by attaching an identifier, such as a radio network temporary identifier (RNTI) unique to the indication signal. In order to satisfy a low delay of the URLLC data and a highly reliable request, the DCI related to the indication signal may also be arranged at the top in the control channel and may also be allocated to a greater number of control channel elements (CCEs).

### Reference Signs List

- 101: scheduler unit
- 102: data generating unit
- 103: control signal generating unit
- 104: indication signal generating unit
- 105: mapping unit
- 106, 213: IFFT unit
- 107, 214: CP attaching unit
- 111, 201: CP removing unit
- 112, 202: FFT unit
- 113: data decoding unit
- 114: SR acquiring unit
- 121: control signal generating unit
- 203: indication signal decoding unit
- 211: eMBB data transmission control unit
- 212: eMBB data generating unit
- 221: control signal decoding unit
- 231: SR generating unit
- 232: URLLC data generating unit
- 251: monitoring signal decoding unit
- 252: indication signal decoding unit

## Claims

1. A base station device comprising:
a reception unit configured to receive an allocation request that requests allocation of a radio resource that is used to transmit first data;
a scheduling unit configured to allocate, to the first data when the allocation request is received by the reception unit, a part of an uplink radio resource allocated to second data for which a larger delay than a delay allowed for the first data is allowed; and
a transmission unit configured to transmit an uplink indication signal indicating that the part of the uplink radio resource is allocated to the first data by the scheduling unit.

2. The base station device according to claim 1, wherein
the scheduling unit allocates another radio resource to the second data to which the radio resource allocated to the first data has been originally allocated, and
the transmission unit transmits the uplink indication signal that specifies the other radio resource allocated to the second data by the scheduling unit.

3. The base station device according to claim 1, wherein
the scheduling unit allocates, to the first data, a part of a downlink radio resource allocated to the second data, and
the transmission unit transmits a downlink indication signal indicating that the part of the downlink radio resource is allocated to the first data by the scheduling unit.

4. The base station device according to claim 3, wherein the transmission unit transmits, by using different radio resources, the uplink indication signal and the downlink indication signal.

5. The base station device according to claim 3, wherein the transmission unit transmits, by using a same radio parameter, the uplink indication signal and the downlink indication signal.

6. The base station device according to claim 3, further comprising a monitoring signal transmission unit configured to transmit a monitoring signal indicating whether or not the uplink indication signal and the downlink indication signal are transmitted.

7. The base station device according to claim 6, wherein the monitoring signal transmission unit transmits the monitoring signal further indicating whether or not a control signal related to the first data is present.

8. The base station device according to claim 3, wherein
the scheduling unit performs allocation of radio resources in units of code blocks, and
the transmission unit transmits the uplink indication signal or the downlink indication signal including information related to allocation of radio resources in units of code block groups (CBGs) each of which includes a plurality of code blocks.

9. The base station device according to claim 8, wherein the transmission unit transmits the uplink indication signal or the downlink indication signal indicating that predetermined data is to be arranged in a radio resource that is located across a plurality of code block groups.

10. A terminal device comprising:
a reception unit configured to receive an uplink indication signal indicating that an uplink radio resource is allocated to first data; and
a transmission control unit configured to suppress, in accordance with the uplink indication signal received by the reception unit, transmission of second data performed by using the uplink radio resource allocated to the first data.

11. A terminal device comprising:
an allocation request transmission unit configured to transmit an allocation request that requests allocation of a radio resource that is used to transmit first data; and
a data transmission unit configured to transmit the first data by using an uplink radio resource that is allocated in accordance with the allocation request transmitted by the allocation request transmission unit and that has been originally allocated to second data for which a larger delay than a delay allowed for the first data is allowed.

12. A radio communication system comprising a base station device, a first terminal device that transmits first data, and a second terminal device that transmits second data for which a larger delay than a delay allowed for the first data is allowed, wherein
the base station device includes
a reception unit configured to receive, from the first terminal device, an allocation request that requests allocation of a radio resource that is used to transmit the first data,
a scheduling unit configured to allocate, to the first data when the allocation request is received by the reception unit, a part of an uplink radio resource allocated to the second data, and
a transmission unit configured to transmit an uplink indication signal indicating that the part of the uplink radio resource is allocated to the first data by the scheduling unit, and
the second terminal device includes
an indication signal reception unit configured to receive the uplink indication signal transmitted from the transmission unit, and
a transmission control unit configured to suppress, in accordance with the uplink indication signal received by the indication signal reception unit, transmission of the second data performed by using the uplink radio resource allocated to the first data.

13. A radio communication method used in a radio communication system that includes a base station device, a first terminal device that transmits first data, and a second terminal device that transmits second data for which a larger delay than a delay allowed for the first data is allowed, the radio communication method comprising:
receiving, performed by the base station device, from the first terminal device, an allocation request that requests allocation of a radio resource that is used to transmit the first data;
allocating, performed by the base station device, to the first data when the allocation request is received, a part of an uplink radio resource allocated to the second data;
transmitting, performed by the base station device, an uplink indication signal indicating that the uplink radio resource is allocated to the first data;
receiving, performed by the second terminal device, the uplink indication signal; and
suppressing, performed by the second terminal device, in accordance with the received uplink indication signal, transmission of the second data performed by using the uplink radio resource allocated to the first data.
